(19) Europäisches Patentamt / European Patent Office / Office européen des brevets

(11) **EP 3 480 814 A1**

(12) **EUROPEAN PATENT APPLICATION**

(43) Date of publication:
**08.05.2019 Bulletin 2019/19**

(51) Int Cl.:
**G10L 15/22** *(2006.01)*    **G10L 15/26** *(2006.01)*
**G10L 15/28** *(2013.01)*

(21) Application number: **18203092.4**

(22) Date of filing: **29.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.11.2017 JP 2017212761**

(71) Applicant: **Hitachi, Ltd.**
**Tokyo 100-8280 (JP)**

(72) Inventor: **SUMIYOSHI, Takashi**
**Tokyo, 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **ROBOT DIALOGUE SYSTEM AND CONTROL METHOD OF ROBOT DIALOGUE SYSTEM**

(57) The present invention makes it possible to control an action of a service robot on the basis of an environment in which the service robot is placed. In a robot dialogue system including a robot to have a processor and a memory and communicate with a user and a dialogue server to have a processor and a memory and control the robot, the robot calculates a speech content and a confidence factor from an inquiry of the user and transmits the speech content and the confidence factor; and the dialogue server accepts the speech content and the confidence factor from the robot, stores an action and a confidence factor corresponding to the speech content in state information, selects an action having the highest confidence factor in the state information as a new action, calculates a cost incurred when the new action is implemented from the present state of the robot, selects a combination of candidates excluding the action having the highest confidence factor as a new candidate of action, calculates a cost incurred when the new candidate of action is implemented in the present state of the service robot, and selects an action or a candidate of action of the lowest cost as a new action.

FIG. 1

## Description

### Technical Field

The present invention relates to a dialogue system of a robot to provide services while communicating with a user.

### Background Art

In recent years, service robots that exist in the same space as human beings and provide various services have been widely developed. A person who develops services implemented by a service robot (hereunder referred to as a service developer) develops the services by using a development environment and a scenario generation tool provided by a maker of the service robot in many cases.

An API of a lower level is provided to a service developer who is familiar with a service robot. In contrast, even to a service developer who is not familiar with a service robot, a scenario generation tool that can describe a service with a simple language or a GUI is provided. Easiness of service development is an important factor in the spread of service robots.

Meanwhile, there is the possibility that a service robot: may misunderstand the intent of a user because of the error of voice recognition or the like; may act on the basis of the misunderstanding; and thus may force a big inconvenience upon the user. A service robot has to: act along the intent of a service developer; and simultaneously act so as not to generate such an inconvenient situation to the greatest possible extent.

In Patent Literature 1, for example, an auto dialogue generation method of estimating a situation from the content of conversations and outputting the situation is disclosed.

In Patent Literature 2 for example, a conversation sentence generation method of estimating a state of a user or an agent and generating an answer sentence conforming to the state is disclosed.

### Citation List

### Patent Literature

Patent Literature 1: Japanese Unexamined Patent Application Publication No. 2006-172280
Patent Literature 2: WO 2014/073612
Patent Literature 3: WO 2014/073613

### Summary of Invention

### Technical Problem

When a service developer who is not familiar with a service robot develops a service by using a scenario generation tool, it is difficult for the service developer to sufficiently assume the case where the service robot misrecognizes the intent of a user and gives an inconvenience to the user.

For example, a situation that a service robot mishears a place where a user wants to be guided and thus results in guidance to a wrong place causes a big burden to the user. Further, even when a service robot notices a case of causing a burden to a user, the service robot hardly implements a scenario to avoid the burden of the user by using a scenario generation tool.

Patent Literature 1 stated above: discloses an auto dialogue generation method of outputting a situation estimated from the content of conversations; but does not provide a method of checking the content of speech conducted by a service robot with the situation of an environment where the robot is located and taking an appropriate action.

Further, in Patent Literature 2, an internal state of a user or an agent is estimated and an answer sentence is generated but a method of controlling action on the basis of information tried to be obtained by a service robot and the situation of an environment where the service robot is located is not provided.

Then the present invention is established in view of the above problems and an object of the present invention is to control the behavior of a service robot on the basis of an environment where the service robot is located.

### Solution to Problem

The present invention is a robot dialogue system including a robot to have a processor and a memory and communicate with a user, and/or a dialogue server to have a processor and a memory and control the robot, and/or a network to connect the dialogue server to the robot, wherein: the robot has a voice information dialogue unit to communicate with the user through voice information, and/or a transfer device to accept a transfer destination and transfer the robot toward the transfer destination, and/or a control unit to transmit a speech content accepted by the voice information dialogue unit and a confidence factor calculated from the speech content to the dialogue server, receive an action on the speech content from the dialogue server, and control the voice information dialogue unit and the transfer device; and/or the dialogue server has a robot control unit to accept scenario information of setting beforehand an action to be implemented by the robot in accordance with the speech content, and/or cost information of setting beforehand a cost of the robot in accordance with a type of the action, and/or state information of retaining a state of the robot, and/or the speech content and the confidence factor from the robot, decide an action implemented by the robot, and/or instruct the robot, and/or a cost calculation unit to calculate a cost of the action of the robot on the basis of the cost information and the state information; and/or the robot control unit stores the action and the confidence factor corresponding to the speech content received from the robot in the state information, and/or selects an action having the highest confidence factor in the state information as a new action, and/or makes the cost calculation unit calculate a cost in the case of implementing the new action in the present state of the robot, and/or selects a combination of candidates excluding the action having the highest confidence factor as a new candidate of action, and/or makes the cost calculation unit calculate a cost in the case of implementing the new candidate of action in the present state of the service robot, and/or selects an action or a candidate of action of the lowest cost as a new action.

**Advantageous Effects of Invention**

According to the present invention, a scenario of automatically implementing another action of reducing a cost caused possibly by an action is generated before a service robot starts implementing the action on the basis of a judgment caused by misunderstanding the intent of a user. As a result, an action of the service robot can be controlled on the basis of an environment where the service robot is located. Further, since a scenario capable of reducing cost is generated automatically on the basis of a scenario generated by a service developer, the burden loaded on a user can be inhibited and a service robot inhibiting user dissatisfaction can be provided.

**Brief Description of Drawings**

Fig. 1 is a view showing an example of a mobile robot dialogue system according to an embodiment of the present invention.

Fig. 2 is a block diagram showing an example of the configuration of a service robot according to an embodiment of the present invention.

Fig. 3 is a flowchart showing an example of a main program in a service robot according to an embodiment of the present invention.

Fig. 4 is a flowchart showing an example of a voice recognition program in a service robot according to an embodiment of the present invention.

Fig. 5 is a flowchart showing an example of a voice synthesis program in a service robot according to an embodiment of the present invention.

Fig. 6 is a flowchart showing an example of a transfer program in a service robot according to an embodiment of the present invention.

Fig. 7 is a block diagram showing an example of the configuration of a robot dialogue server according to an embodiment of the present invention.

Fig. 8 is a flowchart showing an example of a robot control program according to an embodiment of the present invention.

Fig. 9 is a flowchart showing an example of a cost calculation program according to an embodiment of the present invention.

Fig. 10A is a table showing an example of a state table according to an embodiment of the present invention.

Fig. 10B is a table showing an example of a state table according to an embodiment of the present invention.

Fig. 11 is a block diagram showing an example of the configuration of a scenario generation device according to an embodiment of the present invention.

Fig. 12 is a view showing an example of a main scenario generated by a scenario generation device according to an embodiment of the present invention.

Fig. 13A is a flowchart showing an example of a sub-scenario generated by a scenario generation device according to an embodiment of the present invention.

Fig. 13B is a flowchart showing an example of a sub-scenario generated by a scenario generation device according to an embodiment of the present invention.

Fig. 14 is a table showing an example of a cost table according to an embodiment of the present invention.

Fig. 15 is a flowchart showing an example of a scenario generation program according to an embodiment of the present invention.

Fig. 16 is a view showing an example of a user interface provided by a scenario generation device according to an embodiment of the present invention.

Fig. 17 is a table showing an example of a scenario according to an embodiment of the present invention.

## Description of Embodiments

Embodiments according to the present invention are explained hereunder in reference to attached drawings.

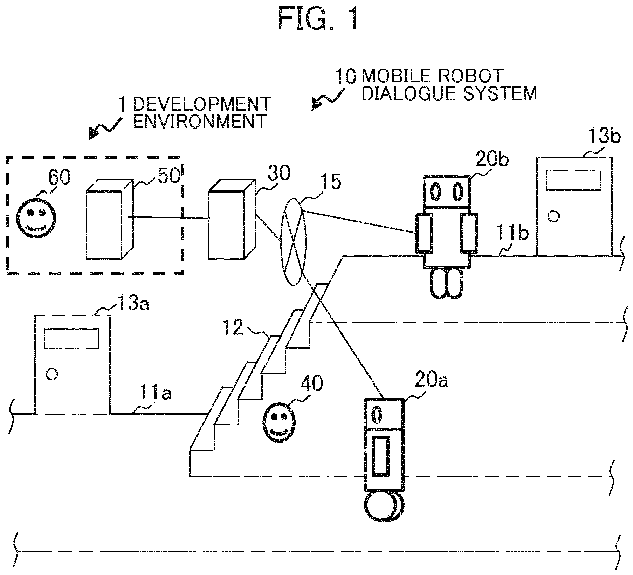

Fig. 1 is a view showing an example of a mobile robot dialogue system according to an embodiment of the present invention.

In the present embodiment, a passage 11a, a passage 11b, a stair 12, a lavatory 13a, and a lavatory 13b are included as an environment where services are implemented. A service robot 20a, a service robot 20b, and a robot dialogue server 30 are arranged in the above environment and provide prescribed services to a user 40.

The robot dialogue server 30 is connected to a scenario generation device 50 installed in a development environment 1. The scenario generation device 50 is used by a service developer 60. The service robots 20a and 20b and the robot dialogue server 30 are connected through a wireless IP network 15, the robot dialogue server 30 and the scenario generation device 50 are connected through a wired IP network (not shown in the figure), and they are in the state of being able to transfer data.

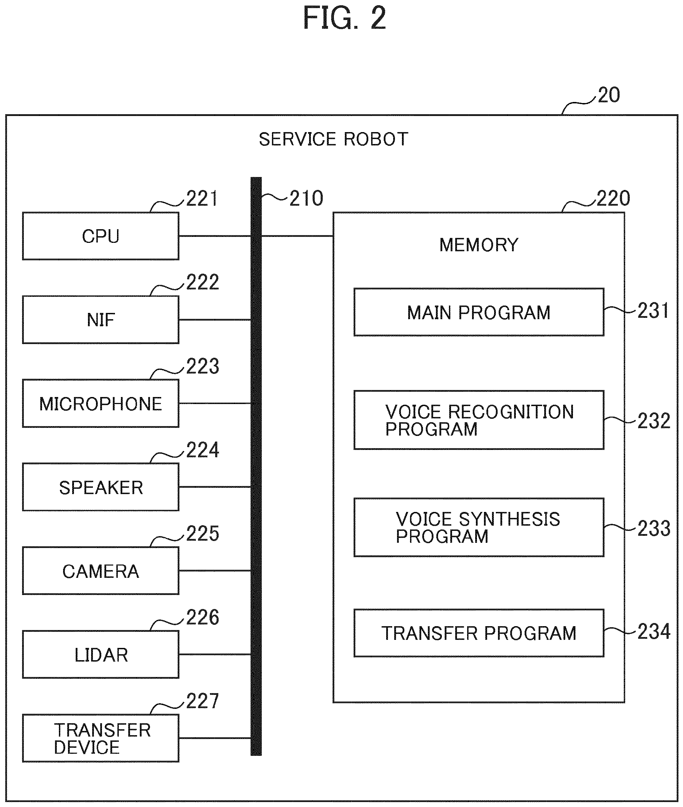

Fig. 2 is a block diagram showing an example of the configuration of a service robot 20. Here, the service robots 20a and 20b have an identical configuration and hence are explained by using a reference sign 20 hereunder.

A bus 210: connects a memory 220, a CPU 221, an NIF (Network Interface) 222, a microphone 223, a speaker 224, a camera 225, a LIDAR (Light Detection and Ranging) 226, and a transfer device 227 to each other and relays a data signal; and can use standards (PCIe and the like) used in a general-purpose PC.

The memory 220 stores programs and data which are described later and can use a DRAM, an HDD, or an SSD for example.

The CPU 221 controls the memory 220, the NIF 222, the microphone 223, the speaker 224, the camera 225, the LIDAR 226, and the transfer device 227 in accordance with programs and can use a general-purpose CPU (for example, SH-4 processor) or a chip controller.

The NIF 222 is a network interface to communicate with another device and can use a general-purpose extension board.

The microphone 223 records a voice around the service robot 20 and can use a condenser microphone and an A/C converter for example. The speaker 224 converts an electric signal into a voice.

The camera 225 is a device to photograph an image around the service robot 20 and is configured by including a CCD, a lens, and others for example.

The LIDAR 226 is a device to measure a distance to an obstacle (or object) in each direction on an observation plane by radiating an electromagnetic wave such as a visible ray and measuring the reflected wave. The transfer device 227 includes a power unit and a driving device for transferring in the environment.

A main program 231 to control the service robot 20, a voice recognition program 232 to convert a voice from the microphone 223 into a text, a voice synthesis program 233 to convert text data into a voice and output the voice from the speaker 224, and a transfer program 234 to control the transfer device 227 and transfer the service robot 20 are loaded on the memory 220 and the programs are implemented by the CPU 221.

The CPU 221 operates as a functional unit to provide a prescribed function by processing in accordance with the program of the functional unit. For example, the CPU 221 functions as a voice recognition unit by processing in accordance with the voice recognition program 232. The same apply to other programs. Further, the CPU 221 operates also as a functional unit to provide respective functions in a plurality of processes implemented by respective programs. A calculator and a calculator system are a device and a system including those functional units.

Information of programs, tables, and the like to materialize the respective functions of the service robot 20 can be stored in: a storage device such as a storage sub-system, a non-volatile semiconductor memory, a hard disk drive, or an SSD (Solid State Drive); or a computer-readable non-transitory data storage medium such as an IC card, an SD card, or a DVD.

Meanwhile, it is also possible to: combine the voice recognition program 232 and the voice synthesis program 233; and use them as a voice information dialogue unit.

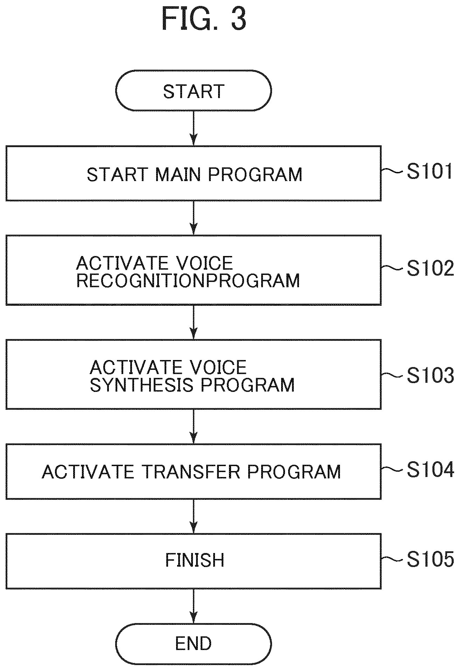

Fig. 3 is a flowchart showing an example of the main program 231 in the service robot 20. Here, although the program is used as a subject of processing in the following explanations, the service robot 20 may be interpreted as a subject of processing.

The main program 231 is implemented at the start of the service robot 20 and finishes after activating the voice recognition program 232, the voice synthesis program 233, and the transfer program 234 respectively (S101 to S105).

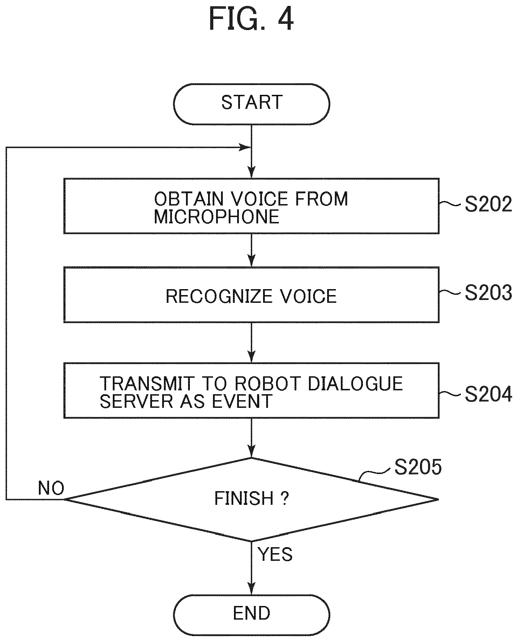

Fig. 4 is a flowchart showing an example of a voice recognition program 232 implemented in the service robot 20.

The voice recognition program 232 obtains a voice from a microphone 233 (S202).

The voice recognition program 232 applies voice recognition to an obtained voice (S203). A universally known or publicly known technology may be applied to voice recognition processing in the voice recognition program 232 and hence the voice recognition processing is not described in detail.

The voice recognition program 232 transmits a text and a confidence factor that are voice recognition results as events (voice recognition events) of the service robot 20 to the robot dialogue server 30 via the NIF 222 (S204). Here, a universally known or publicly known technology may be applied to the calculation of a confidence factor as the result of voice recognition and hence the calculation of a confidence factor is not described in detail in the present embodiment.

The voice recognition program 232: finishes the processing when a prescribed finish condition is satisfied ((S205) S305); but, if not, returns to Step S202 and repeats the above processing. Here, the prescribed finish condition is power shutdown or sleep of the service robot 20 or the like for example.

Though the above processing, the service robot 20 converts a speech accepted from a user 40 into a text and transmits the text to the robot dialogue server 30.

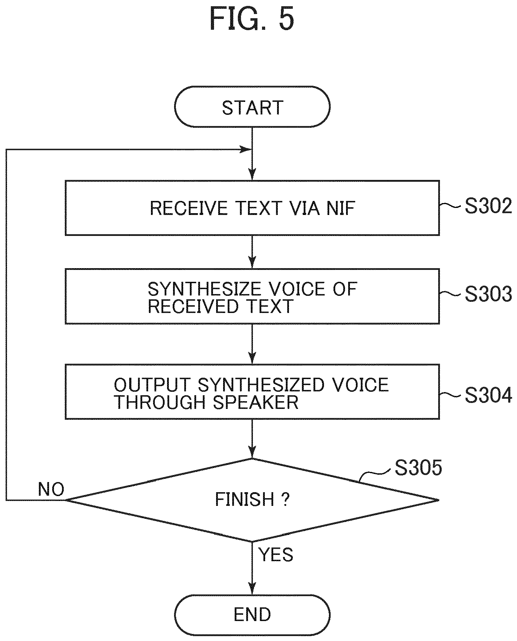

Fig. 5 is a flowchart showing an example of a voice synthesis program 233 implemented by the service robot 20.

The voice synthesis program 233 receives a text from the robot dialogue server 30 via the NIF 222 (S302).

Successively, the voice synthesis program 233 synthesizes a voice of the received text (S303). A universally known or publicly known technology may be applied to the voice synthesis processing in the voice synthesis program 233 and hence the voice synthesis processing is not described in detail.

Successively, the voice synthesis program 233 outputs the synthesized voice from the speaker 224 (S304).

The voice synthesis program 233: finishes the processing when a prescribed finish condition is satisfied; but, if not, returns to Step S302 and repeats the above processing (S305). Here, the prescribed finish condition is power shutdown or sleep of the service robot 20 or the like for example.

Through the above processing, the service robot 20: converts a text received from the robot dialogue server 30 into a voice; outputs the voice from the speaker 224; and communicates with a user 40.

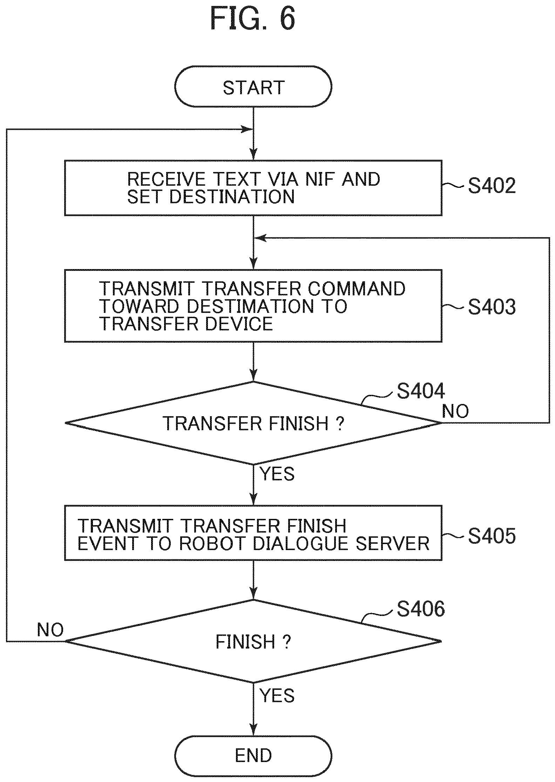

Fig. 6 is a flowchart showing an example of a transfer program 234 implemented by the service robot 20.

The transfer program 234 receives a text from the robot dialogue server 30 via the NIF 222 and sets a designation described in the received text (S402). Information for distinguishing a text to be converted into a voice from a text of setting a destination may be added to the text accepted from the robot dialogue server 30. Otherwise, it is also possible to: accept a voice conversion command and a destination setting command from the robot dialogue server 30; and distinguish the conversion of a text by the service robot 20.

The transfer program 234 transmits a command for transferring toward a destination to the transfer device 227. The transfer program 234 repeats the processing of Step S403 until the transfer finishes (S403, S404).

The transfer program 234, when the transfer by the transfer device 227 finishes, transmits a transfer finish event to the robot dialogue server 30 via the NIF 222 (S405).

The transfer program 234: finishes the processing when a prescribed finish condition is satisfied; but, if not, returns to Step S402 and repeats the above processing (S406). Here, the prescribed finish condition is power shutdown or sleep of the service robot 20 or the like for example.

Through the above processing, the service robot 20 sets a destination in a text accepted from the robot dialogue server 30 and transfers to the designated destination by the transfer device 227.

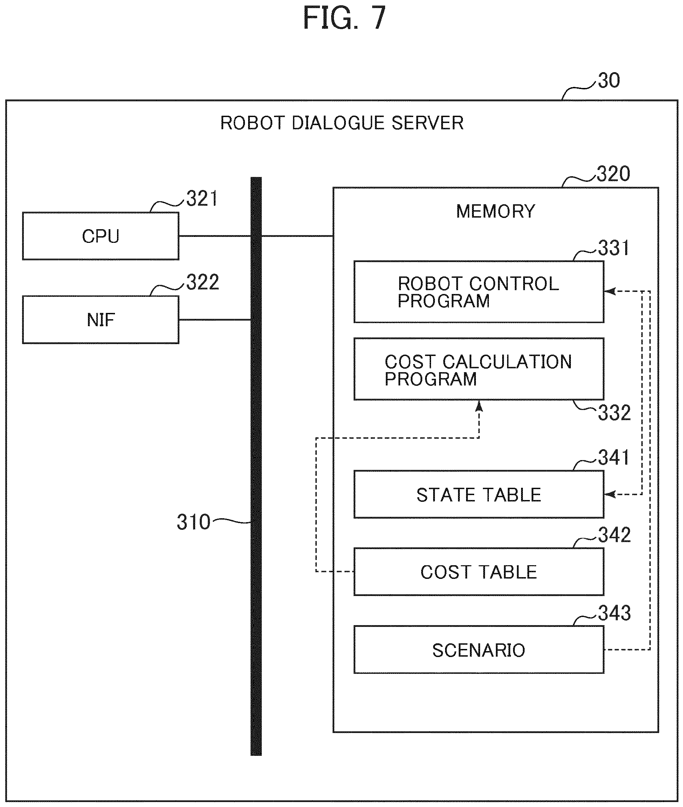

Fig. 7 is a block diagram showing an example of the configuration of the robot dialogue server 30.

A bus 310: connects a memory 320, a CPU 321, and an NIF 322 to each other and relays a data signal; and can use standards (PCIe and the like) used in a general-purpose PC.

The memory 320 stores programs and data which are described later and can use a DRAM, an HDD, or an SSD for example.

The CPU 321 controls the memory 320 and the NIF 322 in accordance with programs and can use a general-purpose CPU (for example, SH-4 processor) or a chip controller.

The NIF 322 is a network interface to communicate with another device and can use a general-purpose expansion board.

A robot control program 331 to control the service robot 20 and a cost calculation program 332 to calculate a cost on the action of the service robot 20 are loaded on the memory 320 and the programs are implemented by the CPU 321.

Further, a state table (state information) 341, a cost table 342, and a scenario 343 are stored as data used by the above programs in the memory 320.

The CPU 321 operates as a functional unit to provide a prescribed function by processing in accordance with the program of the functional unit. For example, the CPU 321 functions as a robot control unit by processing in accordance with the robot control program 331. The same applies to other programs. Further, the CPU 321 operates also as a functional unit to provide respective functions in a plurality of processes implemented by respective programs. A calculator and a calculator system are a device and a system including those functional units.

Information of programs, tables, and the like to materialize the respective functions of the robot dialogue server 30 can be stored in: a storage device such as a storage sub-system, a non-volatile semiconductor memory, a hard disk drive, or an SSD (Solid State Drive); or a computer-readable non-transitory data storage medium such as an IC card, an SD card, or a DVD.

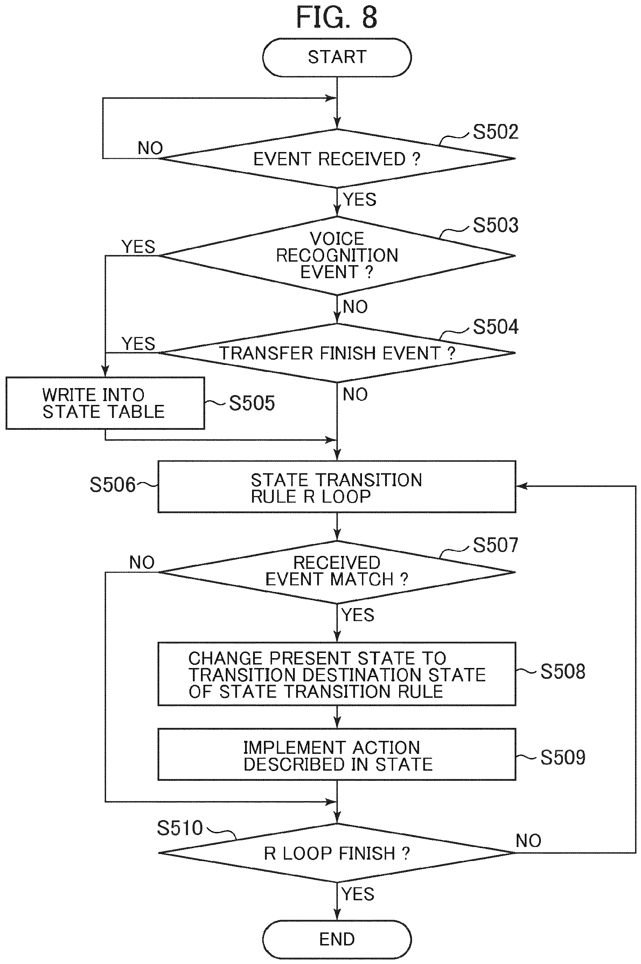

Fig. 8 is a flowchart showing an example of the robot control program 331. Here, although the program is used as a subject of processing in the following explanations, the robot dialogue server 30 may be interpreted as a subject of processing.

Firstly, the robot control program 331 accepts an event (text) from the service robot 20 (S502).

The robot control program 331, in the case of a voice recognition event issued by the voice recognition program 232 in the service robot 20, writes the results of voice recognition (a text and a confidence factor) accepted from the service robot 20 into the state table 341 (S503, S505). The robot control program 331: stores a text (speech content) that has generated the state table 341 and has been received in a candidate value 3412; and stores a confidence factor in a confidence factor 3413.

The robot control program 331, in the case of accepting a transfer finish event issued by the transfer program 234 in the service robot 20, writes the transfer result (transfer finish event) into the state table 341 (S504, S505).

Successively, the robot control program 331 implements loop (R loop) processing at Steps S506 to S510.

The robot control program 331 judges whether or not a received event matches with all the state transition rules of setting a present position as a start state in reference to the scenario 343 (S507).

When the received event matches with a state transition rule, the robot control program 331: changes the present state to a transition destination state of the state transition rule; and implements an action described in the state (S508).

When the action is SAY, the robot control program 331 transmits a text to the voice synthesis program 233 in the service robot 20. Further, when the content of the action is MOVETO, the robot control program 331 transmits a text to the transfer program 234 in the service robot 20 (S509). Furthermore, when the content of the action is cost calculation, the robot control program 331 calls the cost calculation program 332 that will be described later.

The robot control program 331: finishes the processing when a prescribed finish condition is satisfied; but, if not, returns to Step S506 and repeats the above processing (S510). Here, the prescribed finish condition is power shutdown or sleep of the robot dialogue server 30 or the like for example.

Through the above processing, the robot dialogue server 30: decides an action on the basis of an event accepted from the service robot 20; transmits a text including the content of the action to the service robot 20; and controls the service robot 20.

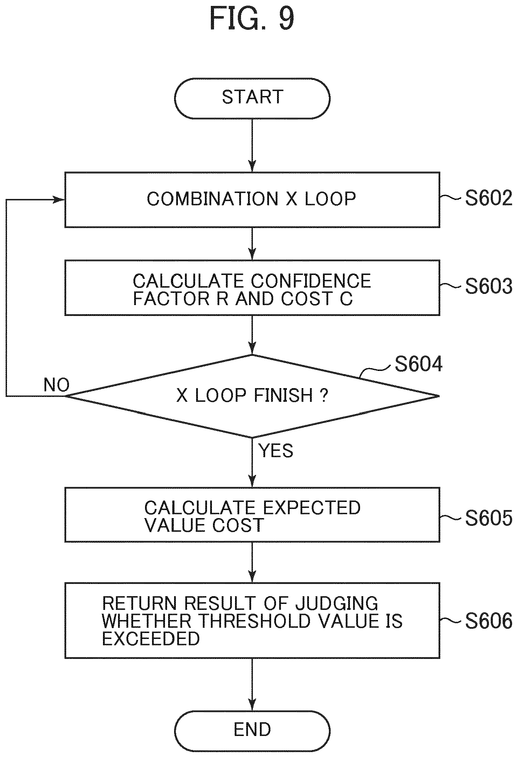

Fig. 9 is a flowchart showing an example of the cost calculation program 332.

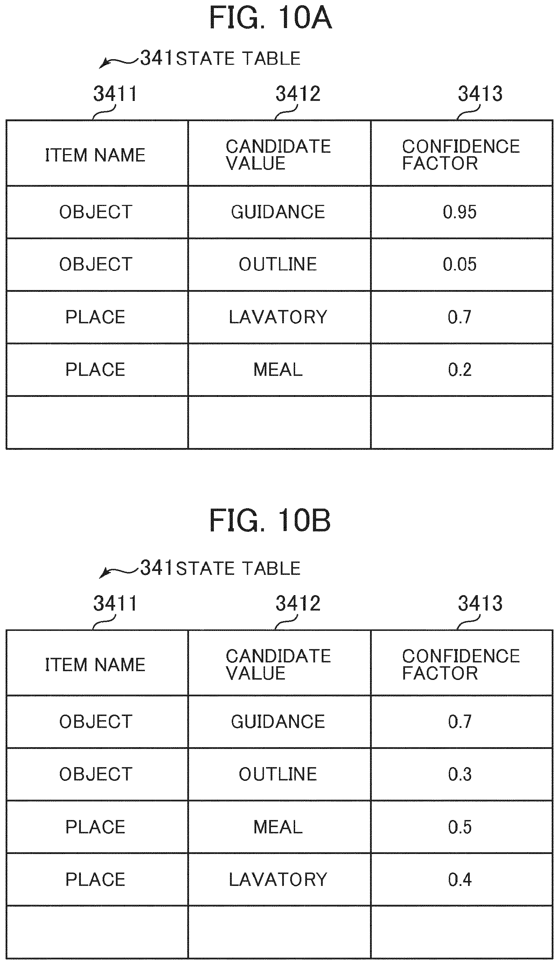

Firstly, the cost calculation program 332 implements loop (X loop) processing of Steps S602 to S604 and calculates a confidence factor R (3413) and a difference cost C of a combination of candidate values 3412 for each of the types of item names 3411 in the state table 341 (refer to Figs. 10A and 10B).

The cost calculation program 332: advances to Step S605 when the calculation of a difference cost C and a confidence factor R for each of the item names 3411 in the state table 341 finishes; but, if not, returns to Step S602 and repeats the above processing.

The cost calculation program 332 obtains a confidence factor R resulting from voice recognition as the product of the confidence factors of the candidate values 3412 of the item names 3411.

In Fig. 10(A) for example, the expression "confidence factor R (object = guidance, place = lavatory) = 0.95 * 0.7 = 0.665" is obtained.

In Fig. 10(B) for example, the expression "confidence factor R (object = outline, place = meal) = 0.7 * 0.5 = 0.35" is obtained.

A difference cost C comes to be an expected value Cavg of a difference cost in the state table 341 when a combination of candidate values 3412 of item names 3411 is implemented. The expected value Cavg of a difference cost is calculated through the following expression. X in the following expression is a set of the combinations of the candidate values 3412 of the item names 3411.

[Expression 1]

$$\text{Cavg} = \frac{1}{N(X)} \sum_{x \in X} C(x)$$

A difference cost C of the state table 341 is calculated from a sum of costs described in the cost table 342 by the cost calculation program 332 with respect to a difference between a state table 341 when a combination of candidate values 3412 having the maximum confidence factors argmaxR is implemented and a state table 341 when a relevant combination is implemented.

Here, a maximum confidence factor argmaxR shows the maximum value in confidence factors 3413 for each of the item names 3411 in the state table 341.

Meanwhile, a state table 341 is generated for each session (connection) of the service robot20 by the robot dialogue server 30 and a difference between state tables 341 can be a difference between a previous value and a present value of a state table 341 for example.

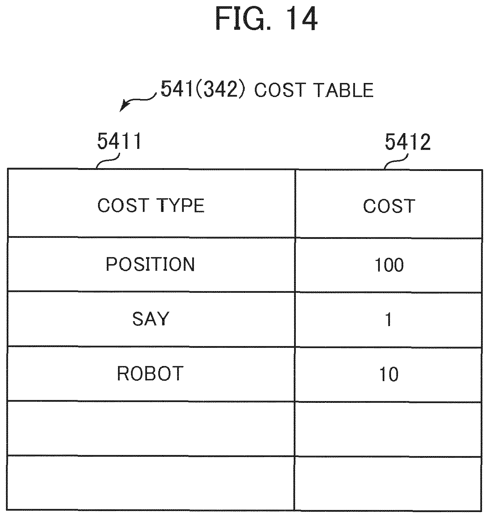

For example, in Fig. 10(A), the combination of the candidate values 3412 having the maximum confidence factors argmaxR in each of the item names 3411 is "object = guidance, place = lavatory" and the difference cost C on this occasion is represented by the expression "difference cost C (object = guidance, place = lavatory) = 0". That is, in a cost table 541 in Fig. 14, since place = POSITION is identical and object = SAY (content of speech) is also identical, there is no difference.

On the other hand, in Fig. 10(A), in the case of implementing the combination of the object and the place in Fig. 10 (B), the difference cost C is represented by the expression "difference cost C (object = outline, place = meal) = 100 + 1 = 101". In the cost table in Fig. 14, the cost 5412 is 100 since place = POSITION is different and the cost 5412 is 1 since object = SAY (content of speech) is different.

In Fig. 10 (B) for example, the combination of the candidate values 3412 having the maximum confidence factors is "object = outline, place = meal" and on this occasion the difference cost C is represented by the expression "difference cost C (object = outline, place = lavatory) = 1". In the cost table 541 in Fig. 14, the cost 5412 is 1 since place = POSITION is identical and only object = SAY (content of speech) is different.

An expected value cost Cexp can be calculated as a sum of the costs of the combinations excluding the maximum confidence factor argmaxR like the following expression (S605).

[Expression 2]

$$\text{Cexp} = \sum_{x \in X, x \neq \underset{x \in X}{\text{argmax}} R(x)} C(x)$$

The cost calculation program 332 judges whether or not an expected value cost exceeds a prescribed threshold value and returns the result as the result of the program (S606) . Here, the cost calculation program 332 may also output a calculation result of a difference cost of a combination of an object and a place from the present state table 341 to the robot control program 331 without comparing the expected value cost Cexp with the threshold value.

Through the above processing, the cost calculation program 332: calculates a state table 341, a cost C, and a confidence factor R, those reflecting the state of the service robot 20; and further calculates an expected value cost Cexp. Then the cost calculation program 332 notifies whether or not the expected value cost Cexp has exceeded a prescribed threshold value (or a calculation result of a difference cost C between a combination of an object and a place and a present state table 341) to the robot control program 331.

Meanwhile, the cost calculation program 332 may also calculate a cost on the basis of wording of a sentence (for example, a distance as a character string of a sentence) or a difference in content (for example, a distance when a sentence is mapped in a semantic space, or the like) when the service robot 20 speaks to a user 40 on the basis of the scenario 343.

Here, as wording of a sentence for example, a distance based on an edit distance (also called a Levenshtein distance) can be used. An edit distance may be calculated by a universally known or publicly known method. Specifically, an edit distance can be calculated as follows.

$$L(A,B) = \min(S(A,B) + I(A,B) + D(A,B))$$

Here, S(A,B), I(A,B), and D(A,B) are a character substitution cost, a character insertion cost, and a character deletion cost for changing A to B, respectively.

Further, as a difference in content for example, a multidimensional feature vector based on a feature (a word and a word string, a part of speech, and the like) extracted from a sentence is mapped in a pre-defined multidimensional space. Then a distance (direct distance or the like) of each sentence in the space can be used.

Figs. 10A and 10B are tables showing examples of the state table 341.

The state table 341: includes the columns of an item name 3411, a candidate value 3412, and a confidence factor 3413; and retains information showing the state of the service robot 20. Here, the state table 341 is generated for a session of each of the service robots 20a and 20b.

For an item name 3411: a candidate value 3412 shows a value which the item name 3411 can take; and a confidence factor 3413 shows a numerical value representing a degree of being confident that the item name 3411 is the candidate value 3412.

The state table 341 retains a state of the service robot itself captured by the service robot 20 and a state of a user 40 obtained by a dialogue with the user or the like together with a confidence factor 3413. Here, the state table 341 is generated for a session of each of the service robots 20a and 20b as stated above.

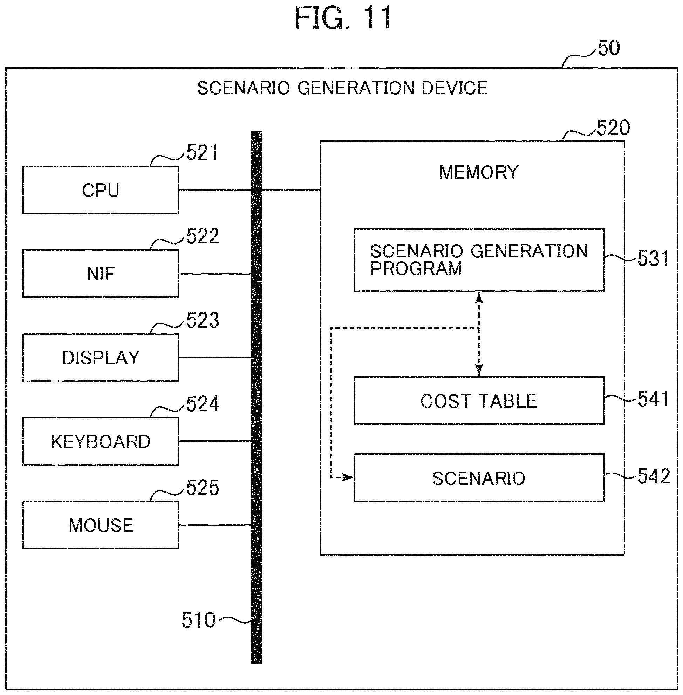

Fig. 11 is a block diagram showing an example of the configuration of the scenario generation device 50.

A bus 510: connects a memory 520, a CPU 521, an NIF 522, a display 523, a keyboard 524, and a mouse 525 to each other and relays a data signal; and can use standards (PCIe and the like) used in a general-purpose PC.

The memory 520 stores programs and data which are described later and can use a DRAM, an HDD, or an SSD for example.

The CPU 521 controls the memory 520 and the NIF 522 in accordance with programs and can use a general-purpose CPU (for example, SH-4 processor) or a chip controller.

The NIF 522 is a network interface to communicate with another device and can use a general-purpose expansion board.

The display 523 is an output device configured by a flat panel display or the like. The keyboard 524 and the mouse 525 are input devices.

A scenario generation program 531 is loaded on the memory 520 and is implemented by the CPU 521. Further, a cost table 541 and a scenario 542, those being used by the scenario generation program 531, are stored in the memory 520. Here, the cost table 541 and the scenario 542 are configured similarly to the cost table 342 and the scenario 343 in the robot dialogue server 30.

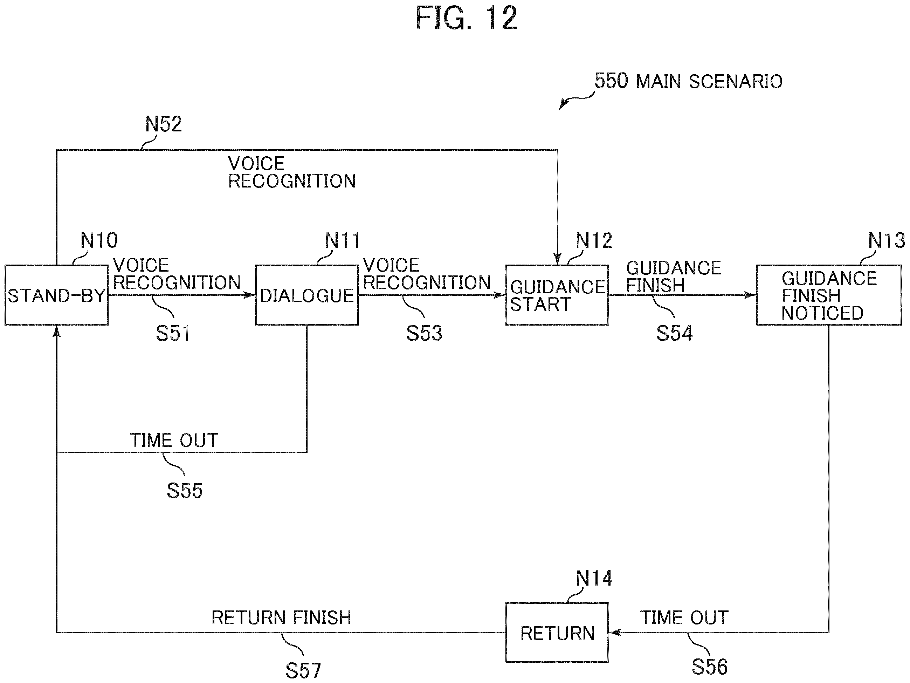

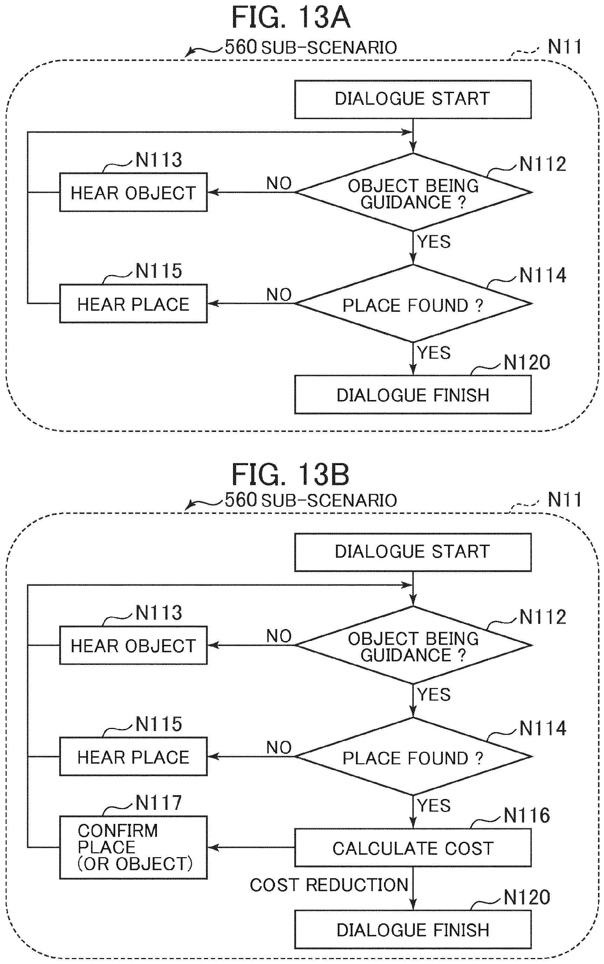

Fig. 12 is a view showing an example of a main scenario 550 generated by the scenario generation device 50. Here, the main scenario 550 in Fig. 12 and a sub-scenario 560 in Figs. 13A and 13B are included in the scenario 542 (343).

The main scenario 550 is represented by a state transition diagram. The state transition diagram includes pluralities of states and state transition rules. Each of the state transition rules: includes a transfer source state, a transfer destination state, and a rule; and shows that the state shifts to the transfer destination state when an event conforming to the rule occurs in the transfer source state.

The main scenario 550 in Fig. 12 shows an example of including five nodes of a stand-by node N10, a dialogue node N11, a guidance start node N12, a guidance finish notice node 13, and a return node N14. The dialogue node N11 can include a sub-scenario 560 to set a series of processing.

In the main scenario 550, the service robot 20 waits for an inquiry from a user 40 at the stand-by node N10. The service robot 20 accepts a speech from a user 40 and implements voice recognition and the robot control program 331 shifts to a transition destination of a state (transition destination state) in accordance with the content of the speech. For example, when a result of voice recognition is "please guide to a lavatory", the robot control program 331 shifts to the guidance start node N12 on the basis of a prescribed rule (S52) and commands the service robot 20 to guide the user 40 to a lavatory 13a.

Further, when a result of voice recognition is the inquiry of "where is a lavatory?", the robot control program 331 shifts to the dialogue node N11 on the basis of a prescribed rule (S51) and commands the service robot 20 to guide the user 40 to the location of a lavatory 13a by voice synthesis. When the user 40 requests guidance to the lavatory 13a as a result of voice recognition at the dialogue node N11, the robot control program 331 shifts to the guidance start node N12 and commands the service robot 20 to guide the user 40 to the lavatory 13a (S54).

When the guidance to a destination finishes, the service robot 20 transmits a guidance finish notice to the robot dialogue server 30 and the robot control program 331 shifts to the guidance finish notice node N13. When an inquiry from a user 40 is not accepted within a prescribed period of time, the robot control program 331 gets time-out (S56) and shifts to the return node N14. At the return node N14, the robot control program 331 transfers the service robot 20 to a prescribed position, finishes the return (S57), and returns to the stand-by node N10.

Here, at the dialogue node N11 too, when an inquiry from a user 40 is not accepted within a prescribed period of time, time-out occurs (S55) and the program returns to the stand-by node N10.

Figs. 13A and 13B are views showing examples of the sub-scenarios 560 generated by the scenario generation device 50.

The sub-scenario 560 defines the content of processing in the dialogue node N11 in the main scenario 550. Fig. 13A shows an example of an edited sub-scenario 560. Fig. 13B shows an example of adding a cost calculation node immediately before a dialogue finish node by the scenario generation program 531.

Fig. 13A is a sub-scenario 560 defining detailed processing in the dialogue node N11 shown in Fig. 12 and shows the state where a service developer 60 has finished editing.

The sub-scenario 560 includes a judgment node N112 to judge whether or not the object of dialogue is guidance, an inquiry node N113 to ask an object when the object of the dialogue is not guidance, a judgment node 114 to judge whether or not the place inquired by a user 40 is identified, an inquiry node N115 to ask a place to the user 40 when the place is not identified, and a dialogue finish node N120.

At the judgment node N112, when a result of voice recognition is guidance and a result of voice recognition on a place exists, the robot control program 331 selects a place and an action conforming to the result of the voice recognition from the scenario 343. When the object is unknown, the program advances to the inquiry node N113 and commands the service robot 20 to inquire the object.

At the judgment node 114, when a place is settled as a result of voice recognition, the robot control program 331: advances to the dialogue finish node N120; and makes the service robot 20 implement a place and an action conforming to the result of voice recognition.

In contrast, when a place is not settled as a result of voice recognition, the robot control program 331: advances to the inquiry node N115; and commands the service robot 20 to inquire a place.

The robot control program 331: implements the processing of the sub-scenario 560 until an object and a place are settled; thus settles a place and an action conforming to a result of voice recognition; and can make the service robot 20 implement the place and the action.

Fig. 13B shows an example of adding a cost calculation node automatically to the sub-scenario 560 shown in Fig. 13A through processing of the scenario generation program 531. The scenario generation program 531 searches the nodes of the sub-scenario 560 sequentially and detects a dialogue finish node N120.

The scenario generation program 531: adds a cost calculation node N116 immediately before the detected dialogue finish node N120; and further adds an inquiry node N117 called from the cost calculation node N116.

At the cost calculation node N116, a cost of the present state of the service robot 20 and a cost incurred when a currently selectable action is implemented are calculated as shown in Fig. 9 and judgment of advancing to either the inquiry node N117 or the dialogue finish node N120 is implemented in accordance with a difference cost C and an expected value cost Cexp.

The robot control program 331 to implement the sub-scenario 560 in Fig. 13B makes the cost calculation program 332 calculate a difference cost C1 of an object, a place, and an action, those being settled at the judgment node N114, from the state table 341 (Figs. 10A and 10B) showing the present state of the service robot 20.

In other words, the robot control program 331 to implement the sub-scenario 560 in Fig. 13B selects a combination of candidate values 3412 having the highest confidence factors 3413 for each of the item names 3411 in the state table 341 as a new action.

For example, when a result of voice recognition is Fig. 10B, the robot control program 331: selects "outline" and "meal" having the highest confidence factors from the candidate values 3412 for "object" and "place respectively in the item names 3411 as a new combination of action; and makes the cost calculation program 332 calculate a difference cost C1 from the present state.

The cost calculation program 332: further selects a combination of candidate values excluding the candidate values 3412 having the highest confidence factors as a new candidate of action; and calculates a difference cost C2 from the present state of the service robot 20. Here, the cost calculation program 332 can: select multiple combinations of candidate values 3412 as the candidates of action; and calculate multiple difference costs C2.

The robot control program 331 can reduce the cost of the service robot 20 by: comparing a difference cost C1 of a new combination of action with a difference cost C2 of a combination of new candidates of action; and outputting the combination of a smaller difference cost as a new action.

Then the robot control program 331 advances to the dialogue finish node N120 and finishes the processing of the sub-scenario 560.

When a candidate of a small difference cost does not exist, the robot control program 331: advances to the inquiry node N117; and commands the service robot 20 to inquire a new candidate of action such as a place or an object by voice dialogue. The robot control program 331 can accept a new candidate of action from a user of the service robot 20 by voice dialogue.

Then the robot control program 331: repeats the processing of the judgment node N112 to the cost calculation node N116; and searches an action capable of reducing cost.

Note that the robot control program 331: prohibits the implementation of the inquiry node N117 from looping in excess of a prescribed number of times (for example, three times); selects a currently selected action as a new action; advances to the dialogue finish node N120; and thus inhibits the inquiry node N117 from being implemented excessively.

In this way, the robot control program 331, when it receives a text and a confidence factor of voice recognition results from the service robot 20: generates a state table 341; stores a candidate value 3412 and a confidence factor conforming to a speech content; and selects a combination of candidate values 3412 having the highest confidence factors 3413 as a new action.

Then the cost calculation program 332 calculates a difference cost C1 between the present state of the service robot 20 (a place or the like) and the new action. Further, the cost calculation program 332: selects a combination of candidate values excluding the candidate values 3412 having the highest confidence factors as a new candidate of action; and calculates a difference cost C2 from the present state of the service robot 20. The robot control program 331: selects an action of the smallest difference cost in the difference cost C1 and the difference cost C2 as a new action; and can command the service robot 20.

Meanwhile, the cost calculation program 332 can calculate a difference cost C on the basis of a distance between a present position of the service robot 20 and a destination of a new action as a difference cost C. Further, the cost calculation program 332 can calculate a difference cost C on the basis of a difference between the individuals of the service robots 20a and 20b as a difference cost C.

Meanwhile, at the cost calculation node N116, the robot control program 331 may decide a new action by comparing an expected value cost Cexp with a prescribed threshold value. Further, a flowchart and a state transition diagram are interchangeable with each other easily.

Fig. 14 is a table showing an example of a cost table 541 (342) .

The cost table 541 includes the columns of a cost type 5411 and a cost 5412. In the cost type 5411, "POSITION" in the table represents difference in the position of the service robot 20, "SAY" in the table represents difference in speech of the service robot 20, and "ROBOT" in the table represents a different service robot 20.

The cost 5412: is an index showing a cost (load of processing or time required of processing) incurred when each of the cost types 5411 is implemented and; is a pre-set value.

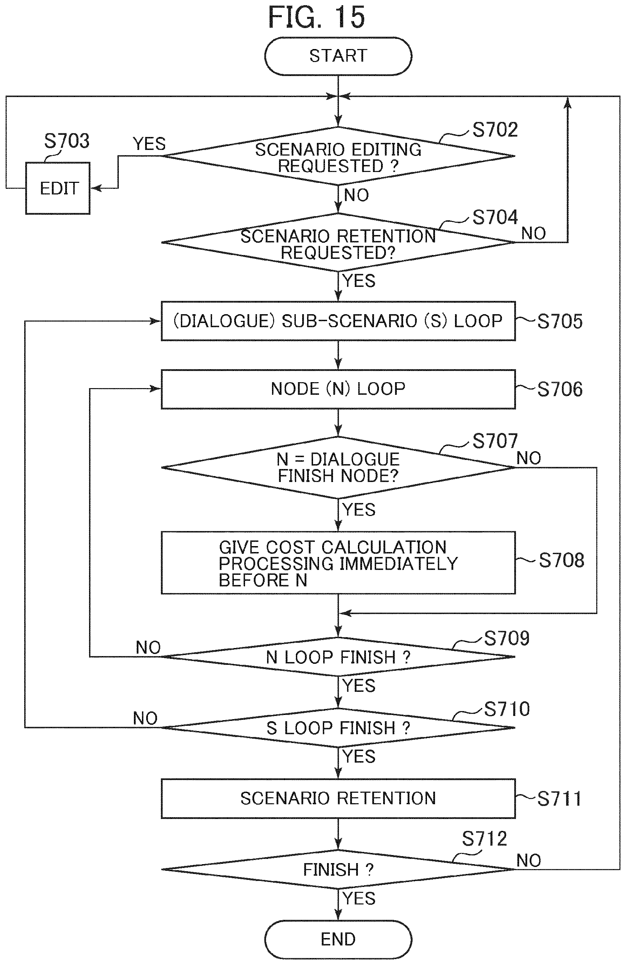

Fig. 15 is a flowchart showing an example of the scenario generation program 531. The processing adds cost calculation processing immediately before the dialogue finish of sub-scenarios in a generated scenario 542.

Firstly, the scenario generation program 531 judges whether or not the scenario generation program 531 accepts a request of editing a scenario 542 from a keyboard 524 operated by a service developer 60 (S702). The scenario generation program 531, when it receives the request of editing, implements the processing of editing the scenario 542 on the basis of the accepted content (S703).

Specifically, the service developer 60 implements editorial processing such as adding a node, an arc, and the like to a main scenario and a sub-scenario.

Successively, the scenario generation program 531: judges whether or not the scenario generation program 531 accepts a request for retaining the scenario 542; advances to Step S705 when accepted; and returns to Step S702 and repeats the above processing when not accepted (S704).

When the scenario 542 is requested to be retained, the scenario generation program 531 implements: loop (S loop) processing (S705 to S710) of processing sub-scenarios included in a currently edited main scenario sequentially; and loop (N loop) processing (S706 to S709) of processing nodes included in each of the sub-scenarios sequentially.

The scenario generation program 531 judges whether or not a currently processed node is a dialogue finish node in a sub-scenario. When the node is the dialogue finish node, the program advances to Step S708 but, if not, advances to Step S709 and implements the processing of a next node.

The scenario generation program 531 adds a node of cost calculation processing immediately before the node (N) of dialogue finish in the sub-scenario (S708).

When the loop (S loop) processing of the sub-scenario and the loop (N loop) processing of the nodes in the sub-scenario finish, the scenario generation program 531: stores the main scenario and the sub-scenario edited at Step S711 in the scenario 542; and finishes the processing.

A cost can be calculated by the cost calculation program 332 immediately before the dialogue finish node in the sub-scenario that has finished editing through the above processing.

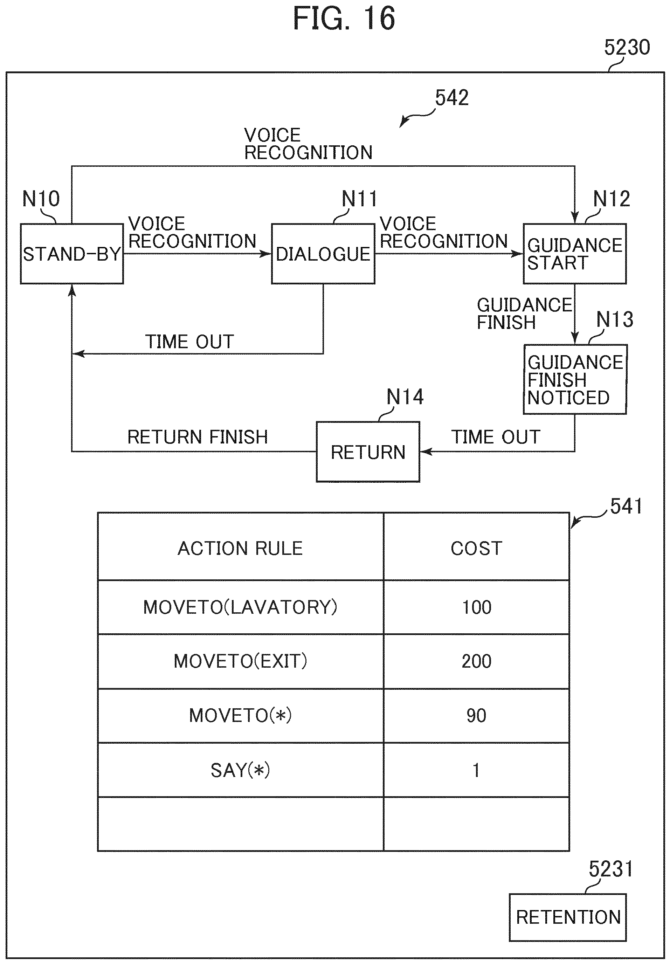

Fig. 16 is a design showing an example of a user interface 5230 displayed in the display 523 by the scenario generation program 531 in the scenario generation device 50. The user interface 5230 is displayed in the display 523 in the scenario generation device 50.

The scenario generation program 531: displays a scenario (main scenario 512) at the upper part of the screen of the user interface 5230; displays a cost table 541 at the lower part of the screen; and can edit the scenario and the cost table 541.

A retention button 5231 is displayed at the lower part of the screen of the user interface 5230 and a request for retaining a scenario can be directed to the scenario generation program 531 by clicking on the button.

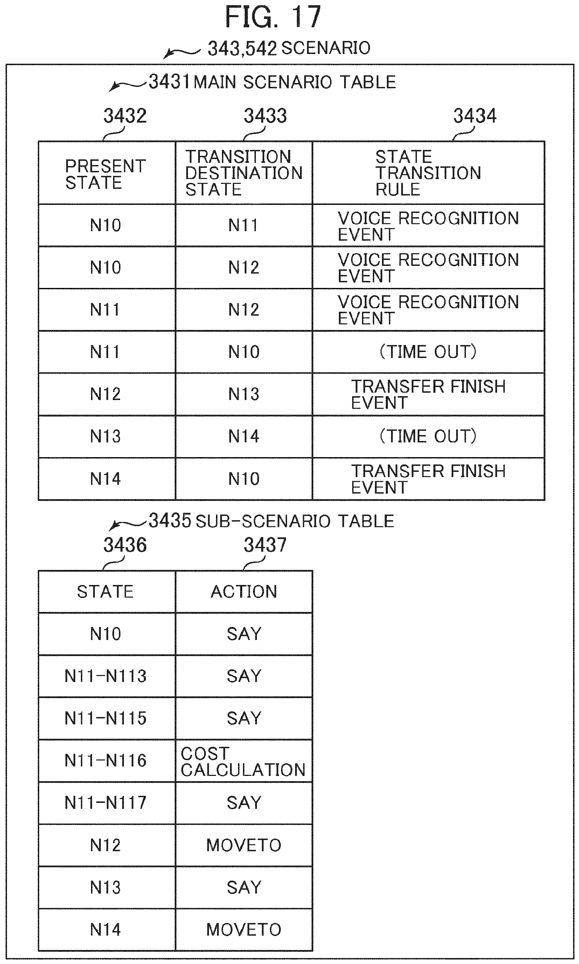

Fig. 17 is a table showing an example of a generated scenario 343 (542). The scenario 343 (542) includes a main scenario table 3431 corresponding to the main scenario 550 shown in Fig. 12 and a sub-scenario table 3435 corresponding to the sub-scenario 560 shown in Figs. 13A and 13B.

The main scenario table 3431 includes a present state 3432 of storing positions (nodes) of the service robot 20 before transition, a transition destination state 3433 of storing positions (nodes) of the service robot 20 at transition destinations, and a state transition rule 3434 of storing rules of shifting the states in a single entry.

The sub-scenario table 3435 includes a state 3436 of storing positions (nodes) of the service robot 20 and an action 3437 of storing the processing of the service robot 20 in a single entry.

The service robot 20 can implement the main scenario 550 in Fig. 12 and the sub-scenario 560 shown in Figs. 13A and 13B on the basis of the scenario 343 (542).

By configuring a robot dialogue system of the configuration explained above, the scenario generation program 531 automatically generates a sub-scenario 560 automatically obtaining an action reducing a cost incurred possibly by a scheduled action on the basis of a scenario generated by a service developer before the service robot 20 starts an action on the basis of a result of voice recognition misunderstanding the intent of a user 40. Then the robot control program 331 implements the sub-scenario 560 of obtaining an action reducing a cost and thus a service of a robot reducing the dissatisfaction of a user 40 can be provided.

Here, the present invention is not limited to the embodiments stated above and includes various modified examples. For example, the aforementioned embodiments: are described in detail in order to make the present invention understood easily; and are not necessarily limited to the cases having all the explained configurations. Further, it is possible to: replace a part of a configuration of a certain embodiment with a configuration of another embodiment; and also add a configuration of an embodiment to a configuration of another embodiment. Furthermore, with regard to a part of a configuration of each of the embodiments, any of the addition, deletion, and replacement of another configuration can be applied individually or in combination.

Further, each of the configurations, the functions, the processing units, the processing means, and the like stated above may be materialized through hardware by designing a part or the whole of it with an integrated circuit or the like for example. Furthermore, each of the configurations, the functions, and the like stated above may be materialized through software by interpreting and implementing a program through which a processor materializes each of the functions. Information in a program, a table, a file, and the like of materializing each of the functions can be stored in a recording device such as a memory, a hard disk, an SSD (Solid State Drive), or the like or a recording medium such as an IC card, an SD card, a DVD, or the like.

Moreover, with regard to control lines and information lines, the lines that are thought to be necessary for explanations are shown and not all of the control lines and information lines are necessarily shown on a product. In reality, almost all configurations may be considered to be connected to each other.

**List of Reference Signs**

| | |
|---|---|
| 10 | Mobile robot dialogue system |
| 20a, 20b | Service robot |
| 30 | Robot dialogue server |
| 50 | Scenario generation device |
| 231 | Main program |
| 232 | Voice recognition program |
| 233 | Voice synthesis program |
| 234 | Transfer program |
| 331 | Robot control program |
| 332 | Cost calculation program |
| 341 | State table |
| 342, 541 | Cost table |
| 343, 542 | Scenario |
| 531 | Scenario generation program |

**Claims**

1. A robot dialogue system comprising:

a robot to have a processor and a memory and communicate with a user;
a dialogue server to have a processor and a memory and control the robot; and
a network to connect the dialogue server to the robot,
wherein the robot has:

a voice information dialogue unit (232, 233) to communicate with the user through voice information;
a transfer device (227) to accept a transfer destination and transfer the robot toward the transfer destination; and
a control unit to transmit a speech content accepted by the voice information dialogue unit (232, 233) and a confidence factor calculated from the speech content to the dialogue server, receive an action on the speech content from the dialogue server, and control the voice information dialogue unit (232, 233) and the transfer device (227);
the dialogue server has:

a robot control unit (321) to accept
scenario information of setting beforehand an action to be implemented by the robot in accordance with the speech content,
cost information of setting beforehand a cost of the robot in accordance with a type of the action,
state information of retaining a state of the robot, and
the speech content and the confidence factor from the robot,
decide an action implemented by the robot, and
instruct the robot, and
a cost calculation unit to calculate a cost of the action of the robot on the basis of the cost information and the state information; and
the robot control unit (321)
stores the action and the confidence factor corresponding to the speech content received from the robot in the state information,
selects an action having the highest confidence factor in the state information as a new action,
makes the cost calculation unit calculate a cost in the case of implementing the new action in the present state of the robot,
selects a combination of candidates excluding the action having the highest confidence factor as a new candidate of action,
makes the cost calculation unit calculate a cost in the case of implementing the new candidate of action in the present state of the service robot, and
selects an action or a candidate of action of the lowest cost as a new action.

2. The robot dialogue system according to Claim 1,
wherein the cost calculation unit calculates the cost on the basis of a distance between a position of the robot and a destination of the action.

3. The robot dialogue system according to Claim 1,
wherein the cost calculation unit calculates the cost on the basis of a difference between wording and content in a sentence spoken to the user by the robot.

4. The robot dialogue system according to Claim 1,
wherein the cost calculation unit calculates the cost on the basis of a difference between the individuals of the robots.

5. The robot dialogue system according to Claim 1,
wherein the robot control unit (321) accepts a new candidate of action from the user by voice dialogue via the robot.

6. The robot dialogue system according to Claim 1, further comprising a scenario generation device (50) to generate scenario information,
wherein the scenario generation device (50) automatically inserts an instruction for making the cost calculation unit calculate a cost into the scenario information generated.

7. A control method of a robot dialogue system including a robot to have a processor and a memory and communicate with a user and a dialogue server to have a processor and a memory and control the robot, the control method of a robot dialogue system comprising:

a first step at which the robot calculates a speech content and a confidence factor by voice recognition from an inquiry of the user and transmits the speech content and the confidence factor to the dialogue server;

a second step at which the dialogue server accepts the speech content and the confidence factor from the robot and stores an action and a confidence factor corresponding to the speech content in state information retaining a state of the robot;

a third step at which the dialogue server selects an action having the highest confidence factor in the state information as a new action;

a fourth step at which the dialogue server calculates a cost incurred when the new action is implemented from the present state of the robot, selects a combination of candidates excluding the action having the highest confidence factor as a new candidate of action, and calculates a cost incurred when the new candidate of action is implemented in the present state of the service robot; and

a fifth step at which the dialogue server selects an action or a candidate of action of the lowest cost as a new action.

8. The control method of a robot dialogue system according to Claim 7,
wherein the fourth step is a step of calculating the cost on the basis of a distance between a position of the robot and a destination of the action.

9. The control method of a robot dialogue system according to Claim 7,
wherein the fourth step is a step of calculating the cost on the basis of a difference between wording and content in a sentence spoken to the user by the robot.

10. The control method of a robot dialogue system according to Claim 7,
wherein the fourth step is a step of calculating the cost on the basis of a difference between individuals of the robots.

11. The control method of a robot dialogue system according to Claim 7,
wherein the fifth step is a step of accepting a new candidate of action from the user by voice dialogue via the robot.

12. The control method of a robot dialogue system according to Claim 7, further comprising a step at which a scenario generation device (50) to generate scenario information automatically inserts an instruction for calculating a cost into the scenario information generated.

# FIG. 1

1 DEVELOPMENT
ENVIRONMENT

10 MOBILE ROBOT
DIALOGUE SYSTEM

60

50

30

15

20b

13b

11b

13a

12

40

20a

11a

# FIG. 2

20

## SERVICE ROBOT

221
CPU

210

220

MEMORY

222
NIF

223
MICROPHONE

224
SPEAKER

225
CAMERA

226
LIDAR

227
TRANSFER DEVICE

MAIN PROGRAM — 231

VOICE RECOGNITION PROGRAM — 232

VOICE SYNTHESIS PROGRAM — 233

TRANSFER PROGRAM — 234

# FIG. 3

START

START MAIN PROGRAM ~S101

ACTIVATE VOICE RECOGNITIONPROGRAM ~S102

ACTIVATE VOICE SYNTHESIS PROGRAM ~S103

ACTIVATE TRANSFER PROGRAM ~S104

FINISH ~S105

END

# FIG. 4

```
              START

                │
                ▼
┌──────────────────────────────┐
│ OBTAIN VOICE FROM            │ ～S202
│ MICROPHONE                   │
└──────────────────────────────┘
                │
                ▼
┌──────────────────────────────┐
│ RECOGNIZE VOICE              │ ～S203
└──────────────────────────────┘
                │
                ▼
┌──────────────────────────────┐
│ TRANSMIT TO ROBOT DIALOGUE   │ ～S204
│ SERVER AS EVENT              │
└──────────────────────────────┘
                │
                ▼
NO         ◇ FINISH ? ◇        ～S205

             │ YES
             ▼

            END
```

# FIG. 5

```
        ┌─────────────┐
        │    START    │
        └─────────────┘
               │
    ┌──────────▼──────────────────────┐
    │                                 │
    │  ┌──────────────────────────┐   │
    └─▶│   RECEIVE TEXT VIA NIF    │───── S302
       └──────────────────────────┘
                   │
       ┌──────────────────────────┐
       │   SYNTHESIZE VOICE OF     │───── S303
       │   RECEIVED TEXT          │
       └──────────────────────────┘
                   │
       ┌──────────────────────────┐
       │  OUTPUT SYNTHESIZED VOICE │───── S304
       │  THROUGH SPEAKER         │
       └──────────────────────────┘
                   │
   NO        ◇─────────────◇
  ◀──────────  FINISH ?      ──── S305
              ◇─────────────◇
                   │ YES
             ┌───────────┐
             │    END    │
             └───────────┘
```

# FIG. 6

START

RECEIVE TEXT VIA NIF AND SET DESTINATION — S402

TRANSMIT TRANSFER COMMAND TOWARD DESTIMATION TO TRANSFER DEVICE — S403

S404

TRANSFER FINISH ? — NO

YES

TRANSMIT TRANSFER FINISH EVENT TO ROBOT DIALOGUE SERVER — S405

S406

NO — FINISH ?

YES

END

# FIG. 7

# FIG. 8

START

S502
EVENT RECEIVED ?

NO

YES

S503
VOICE
RECOGNITION
EVENT ?

YES

NO

S504
TRANSFER FINISH EVENT ?

YES

NO

WRITE INTO
STATE TABLE — S505

STATE TRANSITION
RULE R LOOP

S506

S507
RECEIVED
EVENT MATCH ?

NO

YES

CHANGE PRESENT STATE TO
TRANSITION DESTINATION STATE
OF STATE TRANSITION RULE — S508

IMPLEMENT ACTION
DESCRIBED IN STATE — S509

S510
R LOOP FINISH ?

NO

YES

END

# FIG. 9

```
        ┌─────────────┐
        │    START    │
        └─────────────┘
               │
               ▼
   ┌──────────────────────────┐
   │   COMBINATION X LOOP      │ ～S602
   └──────────────────────────┘
               │
               ▼
   ┌──────────────────────────┐
   │ CALCULATE CONFIDENCE      │ ～S603
   │ FACTOR R AND COST C       │
   └──────────────────────────┘
               │
               ▼
NO          ◇─────────────────◇  ～S604
◄───────────  X LOOP FINISH ?  
            ◇─────────────────◇
               │ YES
               ▼
   ┌──────────────────────────┐
   │ CALCULATE EXPECTED        │ ～S605
   │ VALUE COST                │
   └──────────────────────────┘
               │
               ▼
   ┌──────────────────────────┐
   │ RETURN RESULT OF JUDGING  │ ～S606
   │ WHETHER THRESHOLD VALUE IS│
   │ EXCEEDED                  │
   └──────────────────────────┘
               │
               ▼
        ┌─────────────┐
        │     END     │
        └─────────────┘
```

# FIG. 10A

~341 STATE TABLE

| 3411 | 3412 | 3413 |
| --- | --- | --- |
| ITEM NAME | CANDIDATE VALUE | CONFIDENCE FACTOR |
| OBJECT | GUIDANCE | 0.95 |
| OBJECT | OUTLINE | 0.05 |
| PLACE | LAVATORY | 0.7 |
| PLACE | MEAL | 0.2 |
|  |  |  |

# FIG. 10B

~341 STATE TABLE

| 3411 | 3412 | 3413 |
| --- | --- | --- |
| ITEM NAME | CANDIDATE VALUE | CONFIDENCE FACTOR |
| OBJECT | GUIDANCE | 0.7 |
| OBJECT | OUTLINE | 0.3 |
| PLACE | MEAL | 0.5 |
| PLACE | LAVATORY | 0.4 |
|  |  |  |

# FIG. 11

SCENARIO GENERATION DEVICE — 50

- CPU — 521
- NIF — 522
- DISPLAY — 523
- KEYBOARD — 524
- MOUSE — 525

510

MEMORY — 520

SCENARIO GENERATION PROGRAM — 531

COST TABLE — 541

SCENARIO — 542

# FIG. 12

550 MAIN SCENARIO

# FIG. 13A

560 SUB-SCENARIO          N11

```
                    ┌─────────────────────┐
                    │  DIALOGUE START     │
                    └─────────────────────┘
                              │
      ┌──────────────┐        ▼            N112
      │ ~N113        │   NO  ╱ OBJECT BEING ╲
      │ HEAR OBJECT  │◄─────  ╲  GUIDANCE ?  ╱
      └──────────────┘        ╲            ╱
                               │ YES
      ┌──────────────┐         ▼           N114
      │ ~N115        │   NO  ╱ PLACE FOUND ? ╲
      │ HEAR PLACE   │◄─────  ╲             ╱
      └──────────────┘        ╲            ╱
                               │ YES    N120
                    ┌─────────────────────┐
                    │  DIALOGUE FINISH    │
                    └─────────────────────┘
```

# FIG. 13B

560 SUB-SCENARIO          N11

```
                    ┌─────────────────────┐
                    │  DIALOGUE START     │
                    └─────────────────────┘
                              │
      ┌──────────────┐        ▼            N112
      │ ~N113        │   NO  ╱ OBJECT BEING ╲
      │ HEAR OBJECT  │◄─────  ╲  GUIDANCE ?  ╱
      └──────────────┘        ╲            ╱
                               │ YES
      ┌──────────────┐         ▼           N114
      │ ~N115        │   NO  ╱ PLACE FOUND ? ╲
      │ HEAR PLACE   │◄─────  ╲             ╱
      └──────────────┘        ╲            ╱
                               │ YES    N116
      ┌──────────────┐   ┌─────────────────────┐
      │ ~N117        │   │  CALCULATE COST     │
      │ CONFIRM      │◄──┤                     │
      │ PLACE        │   └─────────────────────┘
      │ (OR OBJECT)  │    COST REDUCTION │
      └──────────────┘                   ▼    N120
                        ┌─────────────────────┐
                        │  DIALOGUE FINISH    │
                        └─────────────────────┘
```

# FIG. 14

541(342) COST TABLE

| COST TYPE | COST |
|-----------|------|
| POSITION | 100 |
| SAY | 1 |
| ROBOT | 10 |
| | |
| | |

5411 5412

# FIG. 15

```
                          START

                            │
    S703         YES        ▼
  ┌──────┐ ◄───────  ◇ SCENARIO EDITING  ── S702
  │ EDIT │◄┐         ◇    REQUESTED ?
  └──────┘ │              │ NO
           │              ▼
           │         ◇ SCENARIO RETENTION ── S704   NO
           │         ◇    REQUESTED?
           │              │ YES
           │              ▼
           │    ┌──────────────────────────────┐
           │    │ (DIALOGUE) SUB-SCENARIO (S) LOOP │ ─ S705
           │    └──────────────────────────────┘
           │              │
           │              ▼
           │    ┌──────────────────────┐
           │    │    NODE (N) LOOP      │ ─ S706
           │    └──────────────────────┘
           │              │
           │              ▼
           │         ◇ N = DIALOGUE ── S707   NO
           │         ◇ FINISH NODE?
           │              │ YES
           │              ▼
           │    ┌──────────────────────┐
           │    │ GIVE COST CALCULATION │
           │    │ PROCESSING IMMEDIATELY│ ─ S708
           │    │ BEFORE N              │
           │    └──────────────────────┘
           │              │
     NO    │              ▼
     ◄──── ◇ N LOOP FINISH ? ── S709
           │              │ YES
     NO    │              ▼
     ◄──── ◇ S LOOP FINISH ? ── S710
                          │ YES
                          ▼
                ┌──────────────────────┐
                │  SCENARIO RETENTION   │ ─ S711
                └──────────────────────┘
                          │
                          ▼
                     ◇ FINISH ? ── S712   NO
                          │ YES
                          ▼
                        END
```

# FIG. 16

5230

542

VOICE
RECOGNITION

N10

N11

N12

VOICE
RECOGNITION

VOICE
RECOGNITION

STAND-BY

DIALOGUE

GUIDANCE
START

GUIDANCE
FINISH

N13

TIME OUT

GUIDANCE
FINISH
NOTICED

N14

RETURN FINISH

RETURN

TIME OUT

541

| ACTION RULE | COST |
|---|---|
| MOVETO(LAVATORY) | 100 |
| MOVETO(EXIT) | 200 |
| MOVETO(*) | 90 |
| SAY(*) | 1 |
| | |

5231

RETENTION

# FIG. 17

343,542 SCENARIO

3431 MAIN SCENARIO TABLE

| 3432 PRESENT STATE | 3433 TRANSITION DESTINATION STATE | 3434 STATE TRANSITION RULE |
|---|---|---|
| N10 | N11 | VOICE RECOGNITION EVENT |
| N10 | N12 | VOICE RECOGNITION EVENT |
| N11 | N12 | VOICE RECOGNITION EVENT |
| N11 | N10 | (TIME OUT) |
| N12 | N13 | TRANSFER FINISH EVENT |
| N13 | N14 | (TIME OUT) |
| N14 | N10 | TRANSFER FINISH EVENT |

3435 SUB-SCENARIO TABLE

| 3436 STATE | 3437 ACTION |
|---|---|
| N10 | SAY |
| N11-N113 | SAY |
| N11-N115 | SAY |
| N11-N116 | COST CALCULATION |
| N11-N117 | SAY |
| N12 | MOVETO |
| N13 | SAY |
| N14 | MOVETO |

**Europäisches Patentamt**

**European Patent Office**

**Office européen des brevets**

# EUROPEAN SEARCH REPORT

Application Number

EP 18 20 3092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | H Asoh ET AL: "Jijo-2: An office robot that communicates and learns", IEEE Intelligent Systems, 2001, pages 46-55, XP055556011, Los Alamitos DOI: 10.1109/5254.956081 Retrieved from the Internet: URL:https://ieeexplore.ieee.org/stamp/stamp.jsp?tp=&arnumber=956081 [retrieved on 2019-02-12] * figures 2-4,6,12 * * page 48, section "How Jijo-2 recognizes speech" * * page 49, section "How Jijo-2 carries out a dialogue" * * page 50, section "How Jijo-2 executes tasks" * * pages 52-53, section "Socially embedded learning" * ----- | 1-12 | INV. G10L15/22 G10L15/26 G10L15/28 |
| A | US 7 813 835 B2 (SONY CORP [JP]) 12 October 2010 (2010-10-12) * figures 3-9,13-24,28, 37-42,44-46 * * column 10, line 31 - column 20, line 16 * * column 23, line 65 - column 29, line 30 * * column 30, line 56 - column 31, line 26 * * column 39, line 10 - column 43, line 3 * * column 43, line 41 - column 44, line 56 * ----- | 1-12 | TECHNICAL FIELDS SEARCHED (IPC) G10L |

The present search report has been drawn up for all claims

| Place of search | Date of completion of the search | Examiner |
|---|---|---|
| Munich | 21 February 2019 | Tilp, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 20 3092

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2019

| Patent document cited in search report | | | Publication date | Patent family member(s) | | | Publication date |
|---|---|---|---|---|---|---|---|
| US 7813835 | B2 | | 12-10-2010 | CN | 1518489 | A | 04-08-2004 |
| | | | | EP | 1486300 | A1 | 15-12-2004 |
| | | | | KR | 20040098498 | A | 20-11-2004 |
| | | | | US | 2004243281 | A1 | 02-12-2004 |
| | | | | WO | 03078113 | A1 | 25-09-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006172280 A
- WO 2014073612 A
- WO 2014073613 A